(19) Europäisches Patentamt / European Patent Office / Office européen des brevets

(11) **EP 4 701 021 A1**

(12) **EUROPEAN PATENT APPLICATION**

(43) Date of publication:
**25.02.2026 Bulletin 2026/09**

(21) Application number: **25181724.3**

(22) Date of filing: **10.06.2025**

(51) International Patent Classification (IPC):
*H02J 3/00* (2026.01)   *G06Q 50/06* (2024.01)
*H02J 3/14* (2026.01)   *H02J 3/32* (2026.01)
*H02J 3/38* (2026.01)

(52) Cooperative Patent Classification (CPC):
**H02J 3/008; G06Q 50/06; H02J 3/003; H02J 3/14; H02J 3/32; H02J 3/381;** H02J 2105/54; H02J 2105/55

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **19.08.2024 TW 113131099**

(71) Applicant: **APh ePower Co., Ltd.**
**Kaohsiung City 821 (TW)**

(72) Inventors:
• **KUO, Cheng-Chien**
**821 Kaohsiung City (TW)**

• **WANG, Xiang-Wei**
**821 Kaohsiung City (TW)**
• **LI, I-Wei**
**821 Kaohsiung City (TW)**
• **SU, Hsiu-Hsien**
**821 Kaohsiung City (TW)**
• **HUANG, Shang-Zeng**
**821 Kaohsiung City (TW)**

(74) Representative: **Becker, Eberhard**
**Becker Kurig & Partner**
**Patentanwälte mbB**
**Bavariastraße 7**
**80336 München (DE)**

(54) **ELECTRIC ENERGY DISPATCHING METHOD AND ELECTRIC ENERGY DISPATCHING SYSTEM**

(57)    An electric energy dispatching method (S100) and an electric energy dispatching system (100) are provided. The electric energy dispatching method (S100) includes: receiving a contracted power supply (EDCP) and a contract period (EDCT) of an electric energy dispatch contract (EDC) in an area; controlling energy storage devices (110_1-110_n) in the area to provide a plurality of stored electric energy (PB1-PBn) to a grid (GD) according to the contracted power supply (EDCP) during the contract period (EDCT); and stabilizing power supply of the grid (GD) using the plurality of stored electric energy (PB1-PBn).

FIG. 2

EP 4 701 021 A1

## Description

BACKGROUND

Technical Field

The disclosure relates to an electric energy dispatching method and an electric energy dispatching system.

Description of Related Art

Household stored electric energy may be supplied to the grid, thereby reducing the power supply burden on the grid. Generally, the power that may be provided to the grid from the stored electric energy is approximately several kilowatts (kW). For large-scale power grids, the stored electric energy of a single user is insufficient to maintain the power supply stability or power supply reliability of the grid.

SUMMARY

The disclosure relates to an electric energy dispatching method and an electric energy dispatching system for dispatching multiple stored electric energy in an area.

In one embodiment of the disclosure, the electric energy dispatching method includes the following operation. A contracted power supply and a contract period of an electric energy dispatch contract in an area are received. Multiple energy storage devices in the area are controlled to provide multiple stored electric energy to a grid according to the contracted power supply during the contract period. Power supply of the grid is stabilized using the stored electric energy.

In one embodiment of the disclosure, the electric energy dispatching system includes multiple energy storage devices in an area and an electric energy management device. The electric energy management device is communicatively coupled to the energy storage devices. The electric energy management device receives a contracted power supply and a contract period of an electric energy dispatch contract in an area. The electric energy management device controls multiple energy storage devices in the area to provide multiple stored electric energy to a grid according to the contracted power supply during the contract period. The stored electric energy is configured to stabilize power supply of the grid.

Based on the above, the electric energy dispatching method and the electric energy dispatching system of the disclosure may control multiple energy storage devices in the area to provide multiple stored electric energy to the grid according to the contracted power supply during the contract period. Therefore, the multiple stored electric energy from the area are provided to the grid during the contract period. In this disclosure, sufficient stored electric energy may be provided to the grid during the contract period. In this way, the power supply stability or power supply reliability of the grid may be maintained during the contract period.

BRIEF DESCRIPTION OF THE DRAWINGS

FIG. 1 is a schematic diagram of an electric energy dispatching system according to an embodiment of the disclosure.
FIG. 2 is a flowchart of an electric energy dispatching method according to an embodiment of the disclosure.
FIG. 3A to FIG. 3D are flowcharts of an electric energy dispatching method according to an embodiment of the disclosure.
FIG. 4 is a schematic diagram of area reserve dispatching according to an embodiment of the disclosure.
FIG. 5A and FIG. 5B are flowcharts of an electric energy dispatching method according to an embodiment of the disclosure.
FIG. 6A and FIG. 6B are flowcharts of an electric energy dispatching method according to an embodiment of the disclosure.
FIG. 7A and FIG. 7B are flowcharts of an electric energy dispatching method according to an embodiment of the disclosure.
FIG. 8 is a schematic diagram of an energy storage device and an electricity meter according to an embodiment of the disclosure.

DETAILED DESCRIPTION OF DISCLOSED EMBODIMENTS

A portion of the embodiments of the disclosure will be described in detail with reference to the accompanying drawings. Element symbol referenced in the following description will be regarded as the same or similar element when the same element symbol appears in different drawings. These examples are only a portion of the disclosure and do not disclose all possible embodiments of the disclosure. More precisely, these embodiments are only examples within the scope of the patent application of the disclosure.

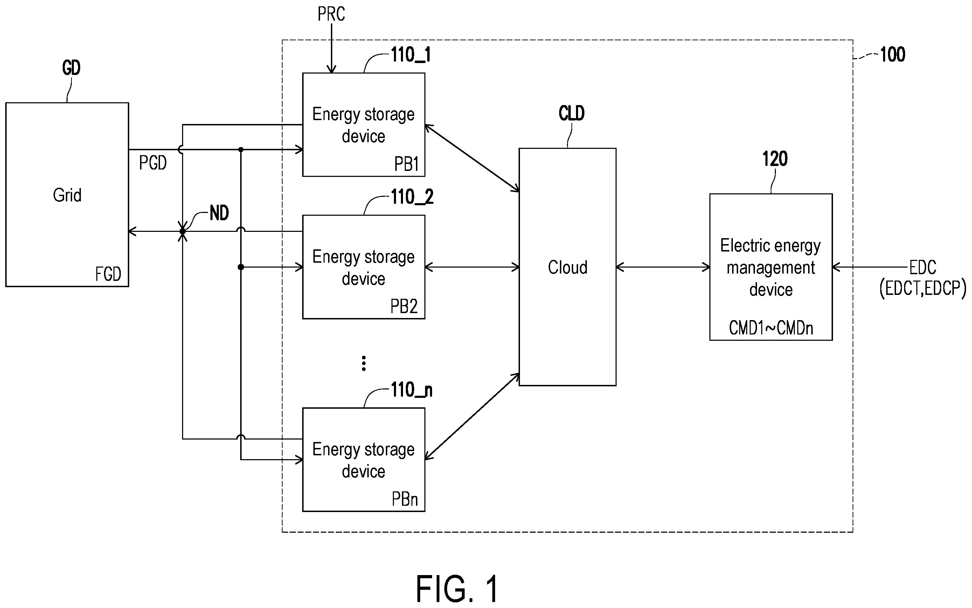

Referring to FIG. 1, FIG. 1 is a schematic diagram of an electric energy dispatching system according to an embodiment of the disclosure. In this embodiment, the electric energy dispatching system 100 includes energy storage devices 110_1 to 110_n and an electric energy management device 120. The energy storage devices 110_1 to 110_n are in an area. For example, the area may be at least one community, at least one building (e.g., a house, a school, a factory), or at least a portion of an administrative district, but the embodiment is not limited thereto. In this embodiment, the energy storage devices 110_1 to 110_n may store electric energy PGD from the grid GD. For example, the energy storage device 110_1 is located in a house or facility in an area, and the house or facility uses electric energy PGD and stores a portion of the electric energy PGD in the energy storage device 110_1. For example, a house or facility may also store the renewable energy PRC in the energy storage device 110_1. Renewable energy PRC may be energy generated by wind power generation, photovoltaic power generation (e.g., solar energy), hydropower generation, etc.

In this embodiment, the electric energy management device 120 is communicatively coupled to the energy storage devices 110_1 to 110_n. The electric energy management device 120 receives the contracted power supply EDCP and the contract period EDCT of the electric energy dispatch contract EDC in the area. The electric energy dispatch contract EDC may be established, for example, based on the intentions of the users of the energy storage devices 110_1 to 110_n. The electric energy management device 120 controls the energy storage devices 110_1 to 110_n in the area according to the contracted power supply EDCP during the contract period EDCT, so that the energy storage devices 110_1 to 110_n provide the stored electric energy PB1 to PBn to the grid GD. In this embodiment, the stored electric energy PB1 to PBn are configured to stabilize the power supply of the grid GD. For example, in the contract period EDCT, the stored electric energy PB1 to PBn are aggregated at the node ND based on the contracted power supply EDCP to generate aggregated electric energy. The aggregated electric energy is provided from the node ND to the grid GD. For example, the node ND may be a switchboard (but the disclosure is not limited thereto).

It is worth mentioning that in the contract period EDCT, the electric energy dispatching system 100 may control the energy storage devices 110_1 to 110_n in the area according to the contracted power supply EDCP to provide stored electric energy PB1 to PBn. The electric energy dispatching system 100 may provide aggregated electric energy of the stored electric energy PB1 to PBn, and supply power to the grid GD using the aggregated electric energy. Therefore, the stored electric energy PB1 to PBn from the area is provided to the grid GD during the contract period EDCT. The electric energy dispatching system 100 is capable of providing sufficient electric energy (i.e., aggregated electric energy) to the grid GD during the contract period EDCT. In this way, the power supply stability or power supply reliability of the grid GD may be maintained during the contract period EDCT.

For example, the energy storage device 110_1 is located in a house in the area. The energy storage device 110_1 may provide stored electric energy PB1 to the grid GD. The energy storage device 110_1 may provide 2 to 5 kilowatts (kW) of power to the grid GD. The power of the single stored electric energy PB1 is not enough to stabilize the power supply of the grid GD.

In this embodiment, the contracted power supply EDCP records the contracted power of the stored electric energy PB1 to PBn provided to the grid GD during the contract period EDCT. For example, "n" equals "1000". The total contracted power of the stored electric energy PB1 to PBn may reach several thousand kW. Therefore, the aggregated electric energy generated by the electric energy dispatching system 100 is sufficient to stabilize the power supply of the grid GD.

In this embodiment, the electric energy management device 120 may wirelessly communicate with the energy storage devices 110_1 to 110_n via the cloud CLD. In some embodiments, the electric energy management device 120 may perform wired communication with at least one of the energy storage devices 110_1 to 110_n. The disclosure is not limited by the communication method between the electric energy management device 120 and the energy storage devices 110_1 to 110_n.

In this embodiment, the electric energy management device 120 may detect the power consumption of users of the energy storage devices 110_1 to 110_n. When the power consumption reaches a power consumption upper limit, the electric energy management device 120 sends a warning message to the electronic device of the corresponding user. The electronic device may be, for example, a portable electronic device (e.g., a smart phone, a smart watch, a tablet), a desktop computer, etc.

In addition, in this embodiment, when the power company is unable to supply power to the grid GD in the area, the electric energy dispatching system 100 may supply power to the grid GD. In this way, the electric energy dispatching system 100 may realize aggregated islanding operation of an area.

In this embodiment, the electric energy management device 120 may be implemented by, for example, a server or an electronic device or a control circuit having a computing function. The control circuit is, for example, a central processing unit (CPU), or other programmable general-purpose or special-purpose microprocessor, a digital signal processor (DSP), a programmable controller, an application specific integrated circuit (ASIC), a programmable logic device (PLD), or other similar devices, or a combination of these devices, which may load and execute computer programs.

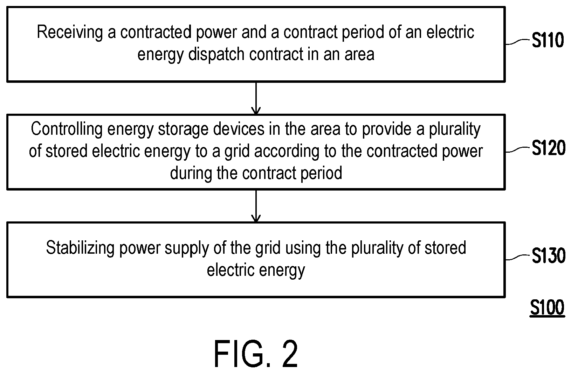

Referring to FIG. 1 and FIG. 2, FIG. 2 is a flowchart of an electric energy dispatching method according to an embodiment of the disclosure. In this embodiment, the electric energy dispatching method S100 may be applicable to the electric energy dispatching system 100. The electric energy dispatching method S100 includes steps S110 to S130. In step S110, the electric energy management device 120 receives the contracted power supply EDCP and the contract period EDCT of the electric energy dispatch contract EDC in the area. In step S120, the electric energy management device 120 controls the energy storage devices 110_1 to 110_n to provide the stored electric energy PB1 to PBn to the grid GD according to the contracted power supply EDCP during the contract period EDCT. In step S130, the stored electric energy PB1 to PBn are configured to stabilize the power supply of the grid GD.

The following will illustrate the implementation details of steps S110 and S120 by way of example.

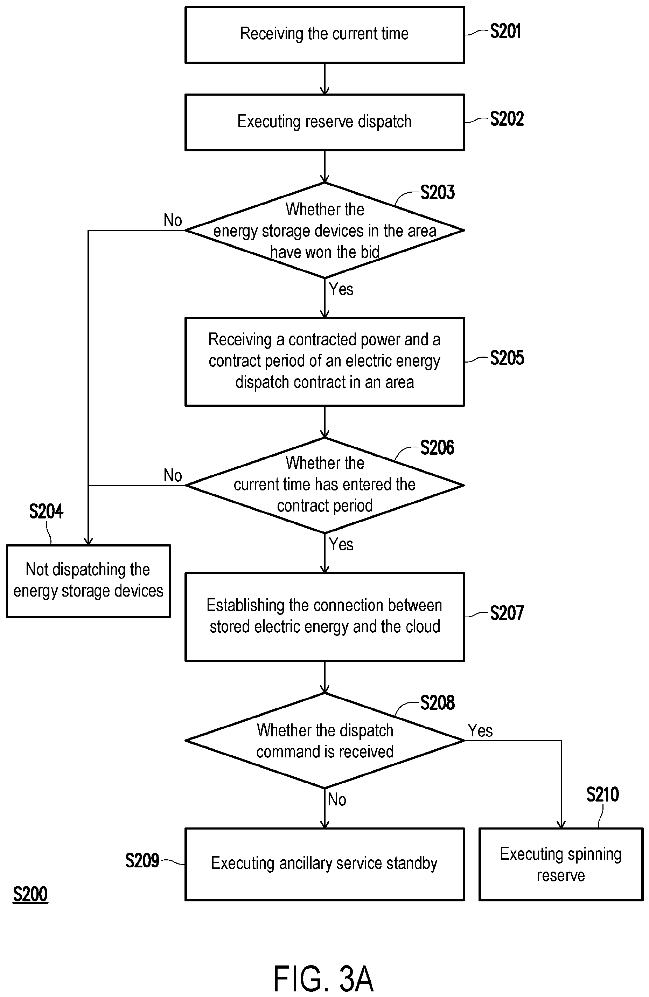

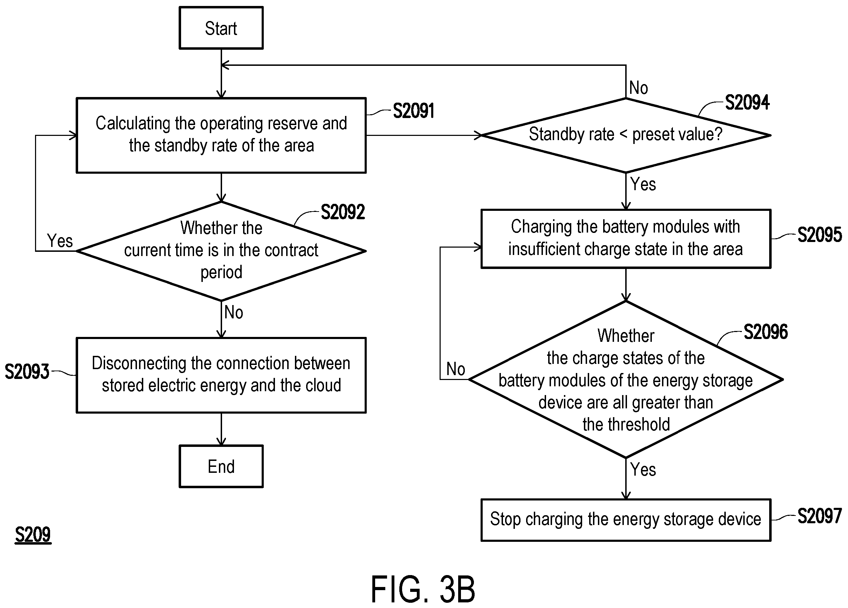

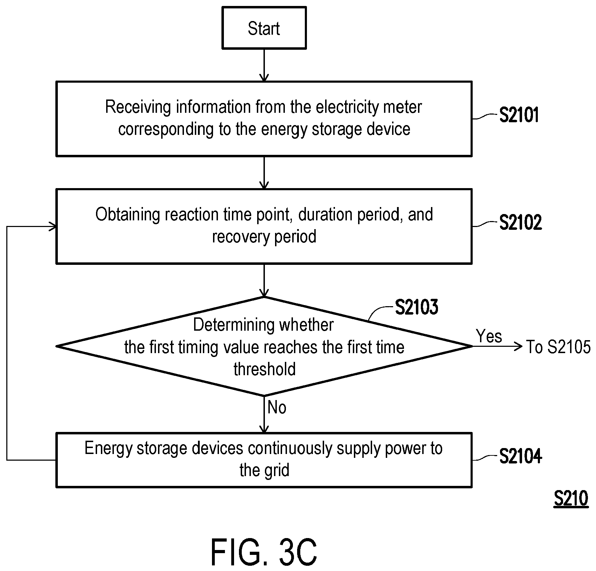

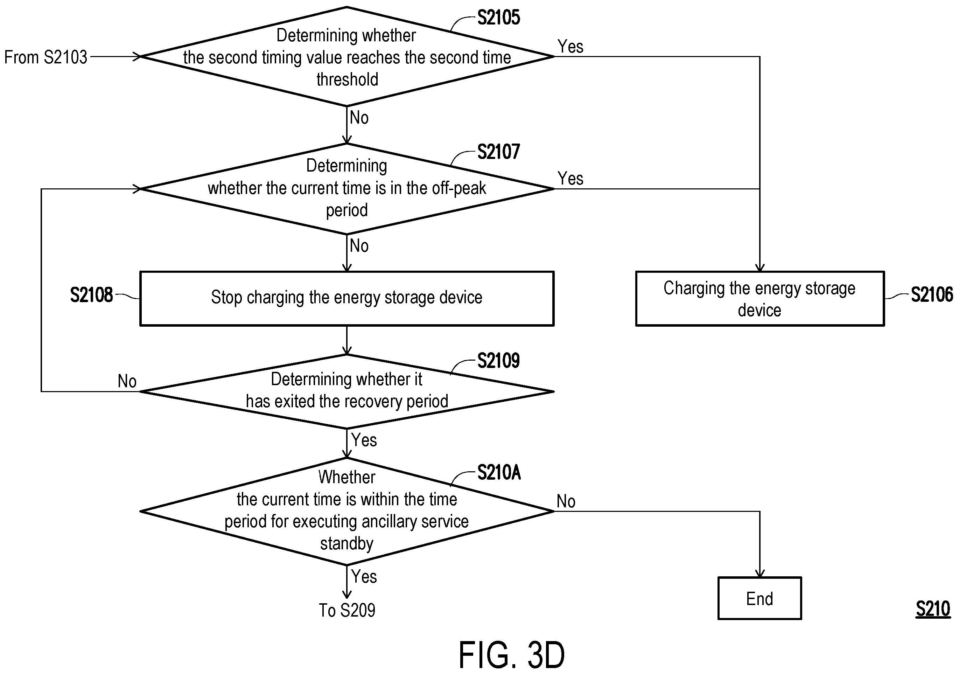

Referring to FIG. 1 and FIG. 3A to FIG. 3D, FIG. 3A to FIG. 3D are flowcharts of an electric energy dispatching method according to an embodiment of the disclosure. In this embodiment, the electric energy dispatching method S200 includes steps S201 to S210. In step S201, the electric energy management device 120 receives the current time. In step S202, the electric energy management device 120 executes reserve dispatching (or area reserve dispatching) according to the current time. In this embodiment, the reserve dispatching may be executed throughout the day or at a specific time. In step S203, the electric energy management device 120 determines whether the energy storage devices 110_1 to 110_n in the area have won the bid according to the electric energy dispatch contract EDC in the area. If the energy storage devices 110_1 to 110_n do not win the bid, the electric energy management device 120 does not dispatch the energy storage devices 110_1 to 110_n in step S204. On the other hand, if the energy storage devices 110_1 to 110_n have won the bid, the electric energy management device 120 receives the contracted power supply EDCP and the contract period EDCT of the electric energy dispatch contract EDC in the area in step S205. The contract period EDCT may be a period during which the energy storage devices 110_1 to 110_n provide the stored electric energy PB1 to PBn to the grid GD. The contracted power supply EDCP may be the power at which the energy storage devices 110_1 to 110_n provide the stored electric energy PB1 to PBn to the grid GD.

In step S206, the electric energy management device 120 determines whether the current time has entered the contract period EDCT. When the current time does not enter the contract period EDCT (e.g., 1 pm to 3 pm, but the disclosure is not limited thereto), the electric energy management device 120 does not dispatch the energy storage devices 110_1 to 110_n in step S204. On the other hand, when the current time enters the contract period EDCT, the electric energy management device 120 establishes the connection between the stored electric energy PB1 to PBn and the cloud CLD in S207 (e.g., sets the connection).

The energy storage devices 110_1 to 110_n determine whether the dispatching commands CMD1 to CMDn are received from the electric energy management device 120 in step S208. The dispatching commands CMD1 to CMDn are commands generated based on the electric energy dispatch contract EDC. When no dispatching commands CMD1 to CMDn are received from the electric energy management device 120, the energy storage devices 110_1 to 110_n execute ancillary service standby of the reserve dispatching in step S209.

When receiving the dispatching commands CMD1 to CMDn from the electric energy management device 120, the energy storage devices 110_1 to 110_n execute the spinning reserve according to the dispatching commands CMD1 to CMDn in step S210.

In this embodiment, step S209 includes steps S2091 to S2097. In step S2091, the electric energy management device 120 calculates the operating reserve and the standby rate of the area. The operating reserve may be the dispatchable power or energy of the electric energy of the area. The standby rate may be a ratio of energy storage devices that may participate in spinning reserve among the energy storage devices 110_1 to 110_n. For example, there are 100 energy storage devices 110_1 to 110_n in the area. If the state of charge (SOC) of the battery modules of 70 energy storage devices is sufficient to participate in the execution of spinning reserve, the standby rate is equal to 70%. For example, the electric energy management device 120 calculates the operating reserve every hour and the standby rate every minute.

In step S2092, the electric energy management device 120 determines whether the current time is in the contract period EDCT. When the current time does not enter the contract period EDCT, the electric energy management device 120 disconnects the connection between the stored electric energy PB1 to PBn and the cloud CLD in step S2093 and ends the ancillary service standby. On the other hand, when the current time is still in the contract period EDCT, the electric energy management device 120 returns to the operation of step S2091.

In step S2094, the electric energy management device 120 determines the standby rate. When the standby rate is greater than or equal to a preset value (e.g., 70%), the electric energy management device 120 returns to the operation of step S2091. On the other hand, when the standby rate is less than the preset value, the electric energy management device 120 will charge the battery modules with insufficient state of charge in the area in step S2095. For example, the electric energy management device 120 may control the grid GD and/or other energy storage devices to charge the battery modules with insufficient state of charge (SOC, or charge state). In step S2096, the electric energy management device 120 determines the state of charge of the battery modules of the energy storage devices 110_1 to 110_n. When at least one of the state of charge of the battery modules of the energy storage devices 110_1 to 110_n is less than a threshold (e.g., 90%), the electric energy management device 120 returns to the operation of step S2095. On the other hand, when the state of charge of the battery modules of the energy storage devices 110_1 to 110_n are all greater than or equal to the threshold, the energy storage devices 110_1 to 110_n stop being charged in step S2097.

In this embodiment, step S210 includes steps S2101 to S210A. In step S2101, the electric energy management device 120 receives information of multiple electricity meters corresponding to the energy storage devices 110_1 to 110_n. Therefore, the electric energy management device 120 may obtain the historical actual power supply in the contract period EDCT. The electric energy management device 120 calculates the power supply electricity price according to the historical actual power supply corresponding to the stored electric energy PB1 to PBn in the contract period EDCT. In step S2102, the electric energy management device 120 obtains the reaction time point, the duration period, and the recovery period from the contract period EDCT. When the current time is equal to the reaction time point, the electric energy management device 120 starts timing to generate a first timing value. The electric energy management device 120 determines whether the first timing value reaches the first time threshold in step S2103. When the first timing value has not reached the first time threshold, the energy storage devices 110_1 to 110_n continue to supply power to the grid GD in step S2104. The power management device 120 continues timing and then returns to step S2103. On the other hand, when the current time is not within the time length, the electric energy dispatching method S200 enters step S2105.

For example, the first time threshold is 70 minutes. In other words, the duration period is, for example, 70 minutes. When receiving the dispatching commands CMD1 to CMDn from the electric energy management device 120, the energy storage devices 110_1 to 110_n execute spinning reserve in the step loop of steps S2103 and S2104 until the first timing value reaches 70 minutes. In other words, the time length for the energy storage devices 110_1 to 110_n to execute spinning reserve is 70 minutes.

In this embodiment, the first time threshold may be adjusted according to the electric energy dispatch contract EDC.

In step S2105, the electric energy management device 120 restarts the timing to generate a second timing value, and determines whether the time value reaches a second time threshold (e.g., 120 minutes). When the second timing value reaches the second time threshold, this indicates that the recovery period has ended. The energy storage devices 110_1 to 110_n are charged in step S2106. When the second timing value has not reached the second time threshold, this indicates that the recovery period has not ended. In step S2107, the electric energy management device 120 determines whether the current time is in an off-peak period.

If the current time is in the off-peak period, the energy storage devices 110_1 to 110_n are charged in step S2106. If the current time is not in the off-peak period, the energy storage devices 110_1 to 110_n are not charged in step S2108. Next, in step S2109, the electric energy management device 120 determines whether it has exited the recovery period. If the recovery period has not been exited, the energy storage devices 110_1 to 110_n maintain the current state. Next, the electric energy management device 120 returns to the operation of step S2107. If the recovery period has been exited, the electric energy management device 120 will further determine whether the current time is within the time period for executing ancillary service standby in step S210A. When the current time is within the time period for executing ancillary service standby, the electric energy dispatching method S200 enters step S209. When the current time is not within the time period for executing ancillary service standby, the electric energy dispatching method S200 ends.

In this embodiment, the electric energy management device 120 sends a dispatching command CMD1 to the energy storage device 110_1 and sends a dispatching command CMD2 to the energy storage device 110_2 based on the electric energy dispatch contract EDC in step S206. The energy storage device 110_1 provides stored electric energy PB1 in response to the dispatching command CMD1. The energy storage device 110_2 provides stored electric energy PB2 in response to the dispatching command CMD2, and so on.

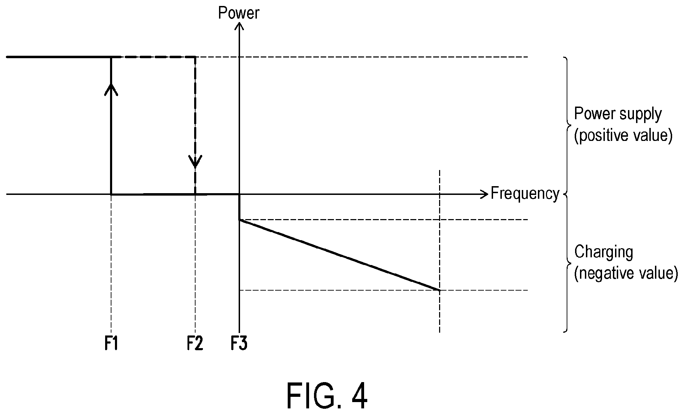

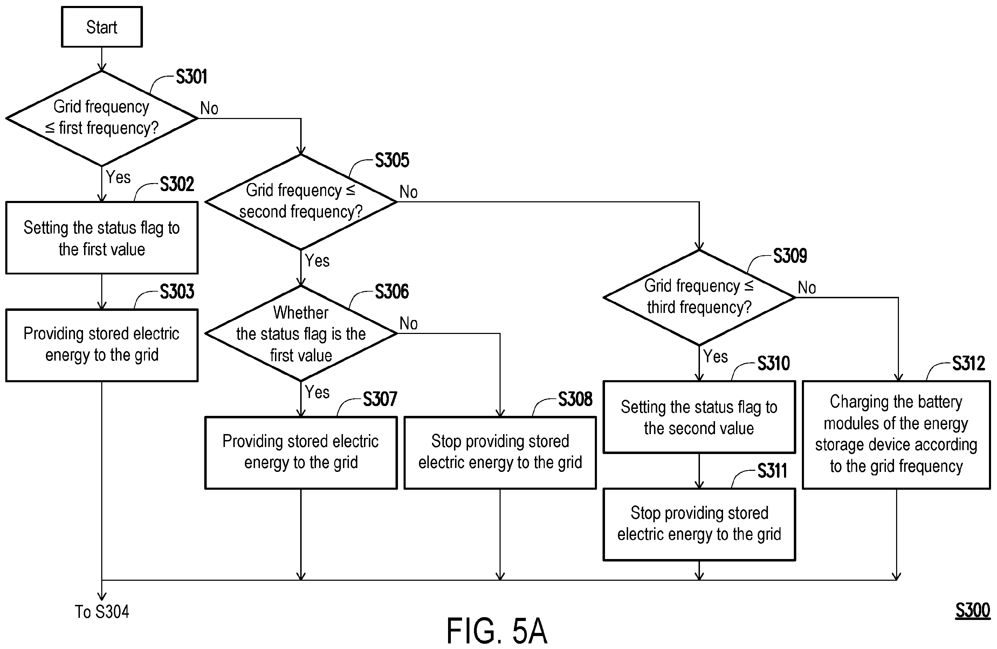

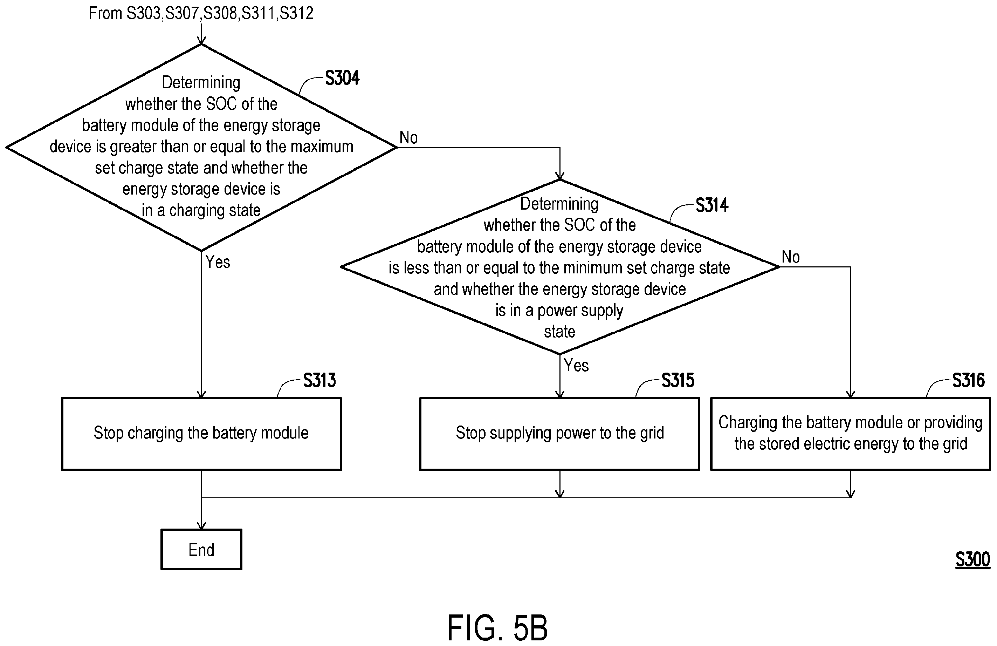

Referring to FIG. 1, FIG. 4, FIG. 5A, and FIG. 5B, FIG. 4 is a schematic diagram of area reserve dispatching according to an embodiment of the disclosure. In this embodiment, the area reserve dispatching shown in FIG. 4 is, for example, a schematic diagram of the area reserve dispatching provided by Taiwan Power Company. FIG. 5A and FIG. 5B are flowcharts of an electric energy dispatching method according to an embodiment of the disclosure. In this embodiment, the electric energy management device 120 sets a first frequency F1, a second frequency F2, and a third frequency F3. The first frequency F1 is less than the second frequency F2. The second frequency F2 is less than the third frequency F3. For example, the first frequency F1 is 59.88 Hz. The second frequency F2 is 59.98 Hz. The third frequency F3 is 60 Hz. In addition, the electric energy management device 120 sets a status flag. When the grid frequency FGD of the grid GD is less than or equal to the first frequency F1, the electric energy management device 120 sets the status flag to a first value (e.g., logic "1"). When the grid frequency FGD is greater than the second frequency F2 and less than or equal to the third frequency F3, the electric energy management device 120 sets the status flag to a second value (e.g., logic "0").

Generally speaking, when the grid GD suddenly encounters an excessive load or a sudden drop in power supply, the grid frequency FGD of the grid GD decreases. Therefore, taking the energy storage device 110_1 as an example, during the area reserve dispatching process, the electric energy management device 120 may receive the grid frequency FGD of the grid GD through the energy storage device 110_1, and dispatch the stored electric energy PB1 according to the changing trend of the grid frequency FGD.

The electric energy dispatching method S300 includes steps S301 to S316. In step S301, the electric energy management device 120 compares the grid frequency FGD and the first frequency F1. When the grid frequency FGD is less than or equal to the first frequency F1, the electric energy management device 120 sets the status flag to the first value in step S302, and provides the stored electric energy PB1 to the grid GD according to the dispatching command CMD1 in step S303. Next, the electric energy management device 120 determines the state of the energy storage device 110_1 in step S304.

In step S301, when the grid frequency FGD is greater than the first frequency F1, the electric energy management device 120 compares the grid frequency FGD and the second frequency F2 in step S305. When the grid frequency FGD is less than or equal to the second frequency F2, this indicates that the grid frequency FGD is greater than the first frequency F1 and less than or equal to the second frequency F2. Next, the electric energy management device 120 determines the status flag in step S306. When the status flag has a first value, this indicates that the grid frequency FGD is increasing. Therefore, the energy storage device 110_1 provides the stored electric energy PB1 to the grid GD according to the dispatching command CMD1 in step S307. Next, the electric energy management device 120 determines the state of charge of the battery module of the energy storage device 110_1 in step S304.

When the status flag has the second value, this indicates that the grid frequency FGD is decreasing. Therefore, the energy storage device 110_1 stops providing the stored electric energy PB1 to the grid GD in step S308. Next, the electric energy management device 120 determines the state of the energy storage device 110_1 in step S304.

Based on steps S305 to S308, when the grid frequency FGD is greater than the first frequency F1 and less than or equal to the second frequency F2, the electric energy management device 120 may determine the changing trend of the grid frequency FGD according to the status flag, and dispatch the stored electric energy PB1 according to the changing trend of the grid frequency FGD.

In step S305, when the grid frequency FGD is greater than the second frequency F2, the electric energy management device 120 compares the grid frequency FGD and the third frequency F3 in step S309. When the grid frequency FGD is less than or equal to the third frequency F3, this indicates that the grid frequency FGD is greater than the second frequency F2 and less than or equal to the third frequency F3. Next, the electric energy management device 120 sets the status flag to the second value in step S310, and stops providing the stored electric energy PB1 to the grid GD in step S311. Next, the electric energy management device 120 determines the state of the energy storage device 110_1 in step S304.

In step S309, when the grid frequency FGD is greater than the third frequency F3, the energy storage device 110_1 charges the battery module of the energy storage device 110_1 using the electric energy PGD of the grid GD according to the grid frequency FGD in step S312. In step S312, the increase in the grid frequency FGD indicates that the load of the grid GD is decreasing. At this time, the energy storage device 110_1 charges the battery module. The greater the grid frequency FGD, the greater the charging power (i.e., the greater the negative value). Next, the electric energy management device 120 determines the state of the energy storage device 110_1 in step S304.

In this embodiment, when the grid frequency FGD is greater than the third frequency F3, the charging power is linearly correlated with the grid frequency FGD, but the disclosure is not limited thereto. In some embodiments, when the grid frequency FGD is greater than the third frequency F3, the charging power is non-linearly correlated with the grid frequency FGD.

In step S304, the electric energy management device 120 determines whether the state of charge (SOC) of the battery module of the energy storage device 110_1 is greater than or equal to a maximum set state of charge (e.g., 98%, but the disclosure is not limited thereto) and whether the energy storage device 110_1 is in a charging state. When the state of charge of the battery module of the energy storage device 110_1 is greater than or equal to the maximum set state of charge and the energy storage device 110_1 is in the charging state, the electric energy management device 120 controls the energy storage device 110_1 to stop charging the battery module in step S313. Next, the electric energy dispatching method S300 ends or returns to step S301.

In step S304, when the state of charge of the battery module of the energy storage device 110_1 is less than the maximum set state of charge or the energy storage device 110_1 is in a power supply state, the electric energy management device 120 determines whether the state of charge of the battery module of the energy storage device 110_1 is less than or equal to the minimum set state of charge (e.g., 50%, but the disclosure is not limited to this) and whether the energy storage device 110_1 is in the power supply state in step S314. When the state of charge of the battery module of the energy storage device 110_1 is less than or equal to the minimum set state of charge and the energy storage device 110_1 is in the power supply state, the electric energy management device 120 controls the energy storage device 110_1 to stop supplying power to the grid GD in step S315. Next, the electric energy dispatching method S300 ends or returns to step S301.

When the state of charge of the battery module of the energy storage device 110_1 is greater than the minimum set state of charge, the electric energy management device 120 controls the energy storage device 110_1 to continuously charge the battery module and/or supply power to the grid GD in step S316. Next, the electric energy dispatching method S300 ends or returns to step S301.

It should be understood that the electric energy dispatching method S300 may also be applicable to at least one of the energy storage devices 110_2 to 110_n.

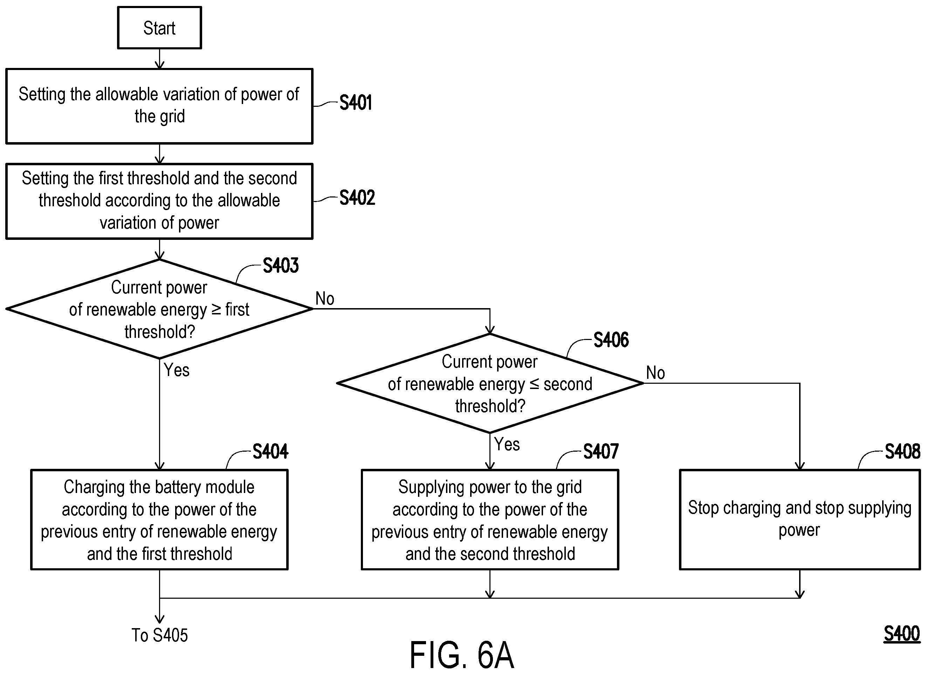

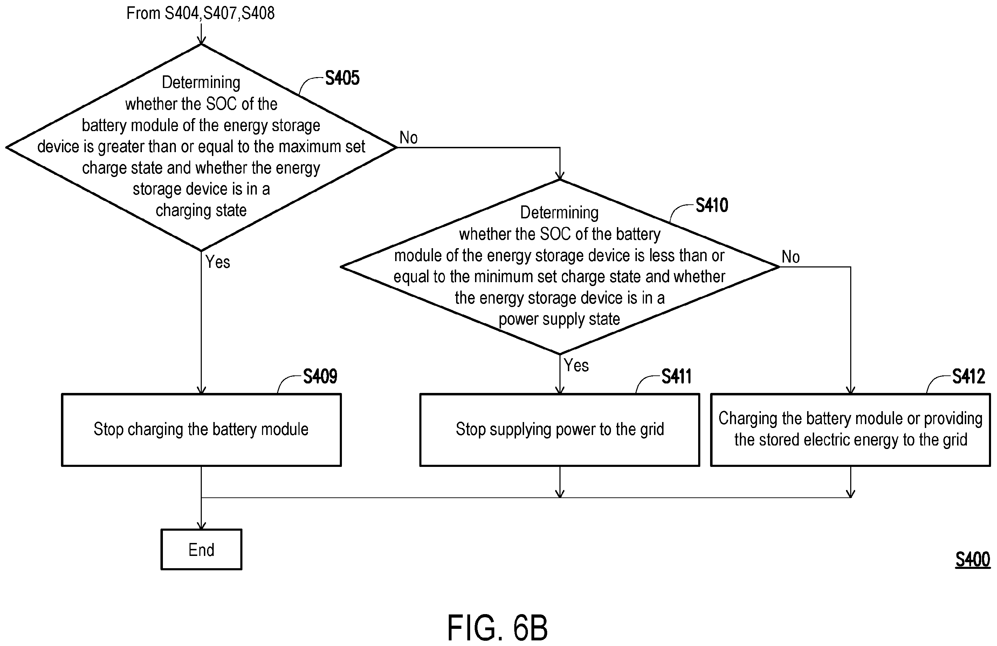

Referring to FIG. 1, FIG. 6A and FIG. 6B, FIG. 6A and FIG. 6B are flowcharts of an electric energy dispatching method according to an embodiment of the disclosure. In this embodiment, the electric energy management device 120 may receive power from the grid GD through the energy storage device 110_1, and dispatch the stored electric energy PB1 according to the variation of the power of the renewable energy PRC using the electric energy dispatching method S400. The power of a renewable energy PRC may fluctuate due to environmental variation (e.g., changes in sunlight intensity, wind speed). Therefore, the electric energy management device 120 stabilizes the power of the renewable energy PRC using the electric energy dispatching method S400 during the contract period EDCT. In this embodiment, the renewable energy PRC may come from the grid GD.

The electric energy dispatching method S400 includes steps S401 to S412. In step S401, the electric energy management device 120 sets an allowable variation of power of the renewable energy PRC. For example, the user sets the allowable variation range of power of the renewable energy PRC to "10" per minute. Therefore, the electric energy management device 120 may divide the allowable variation range by "100" to restore the allowable variation range to "10%". The electric energy management device 120 divides the allowable variation range by "60" to generate the allowable variation range per second. The electric energy management device 120 multiplies the average power of the renewable energy PRC by the allowable variation range per second to generate the allowable variation of the power of the renewable energy PRC.

In step S402, the electric energy management device 120 sets a first threshold and a second threshold according to the allowable variation of power. The first threshold is greater than the second threshold. For example, the electric energy management device 120 may add the allowable variation to the power of the previous entry of renewable energy PRC (i.e., the previous second) to generate the first threshold, and subtract the allowable variation from the power of the previous entry of renewable energy PRC to generate the second threshold. Therefore, the first threshold is expressed as Formula (1). The second threshold is expressed as Formula (2).

$$Pmax = P\_last + P\_rate \ldots Formula\ (1)$$

$$Pmin = P\_last - P\_rate \ldots Formula\ (2)$$

Pmax is the first threshold. Pmin is the second threshold. P_last is the power of the previous entry of renewable energy PRC. P_rate is the allowable variation range.

After the first threshold and the second threshold are set, the electric energy management device 120 dispatches the stored electric energy PB1 according to the comparison result between the current power of the renewable energy PRC and the first threshold and the second threshold.

Next, the electric energy management device 120 dispatches the stored electric energy PB1 and the renewable energy PRC according to the comparison result between the current power of the renewable energy PRC and the first threshold and the second threshold.

In step S403, the electric energy management device 120 determines whether the current power of the renewable energy PRC is greater than or equal to the first threshold. Taking the energy storage device 110_1 as an example, when the current power of the renewable energy PRC is greater than or equal to the first threshold, the electric energy management device 120 charges the battery module of the energy storage device 110_1 according to the power of the previous entry of renewable energy PRC and the first threshold in step S404. For example, in step S404, the electric energy management device 120 may subtract the first threshold from the power of the previous entry of renewable energy PRC to generate a power dispatching value (i.e., P_last - Pmax). The power value is a negative value, which indicates that the energy storage device 110_1 charges the battery module using the electric energy of the renewable energy PRC. That is, when the current power of the renewable energy PRC is greater than the upper limit of the allowable variation (i.e., the first threshold), the energy storage device 110_1 does not supply power to the renewable energy PRC, but rather charges the battery module using the electric energy of the renewable energy PRC. Next, the electric energy management device 120 determines whether to supply power or charge according to the state of the energy storage device 110_1 in steps S405 and S409 to S412.

In step S403, when the current power of the renewable energy PRC is less than the first threshold, the electric energy management device 120 determines whether the current power of the renewable energy PRC is less than or equal to the second threshold in step S406. When the current power of the renewable energy PRC is less than or equal to the second threshold, the energy storage device 110_1 supplies power to the grid GD according to the power of the previous entry of renewable energy PRC and the second threshold in step S407. For example, in step S407, the electric energy management device 120 may subtract the second threshold from the power of the previous entry of renewable energy PRC to generate a power dispatching value (i.e., P_last - Pmin). The power value is a positive value, which indicates that the energy storage device 110_1 supplies power to the grid GD using the stored electric energy PB1. That is, when the current power of the renewable energy PRC is less than the lower limit of the allowable variation (i.e., the second threshold), the energy storage device 110_1 does not supply power to the renewable energy PRC. Next, the electric energy management device 120 determines whether to supply power or charge according to the state of the energy storage device 110_1 in steps S405 and S409 to S412.

In step S406, when the current power of the renewable energy PRC is greater than the second threshold, this means that the current power of the renewable energy PRC is within the allowable variation. Therefore, the energy storage device 110_1 stops supplying power and stops charging in step S408. Next, the electric energy management device 120 determines whether to supply power or charge according to the state of the energy storage device 110_1 in steps S405 and S409 to S412.

In this embodiment, the operations of steps S405 and S409 to S412 are substantially similar to the operations of steps S304 and S313 to S316, and thus are not repeated herein.

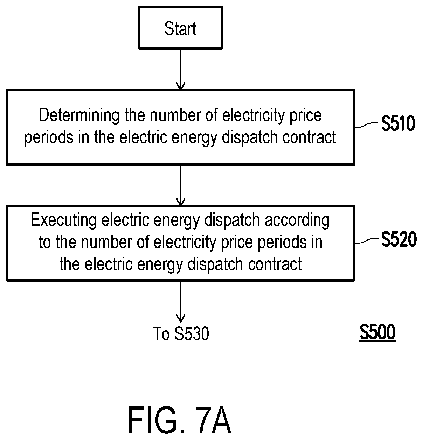

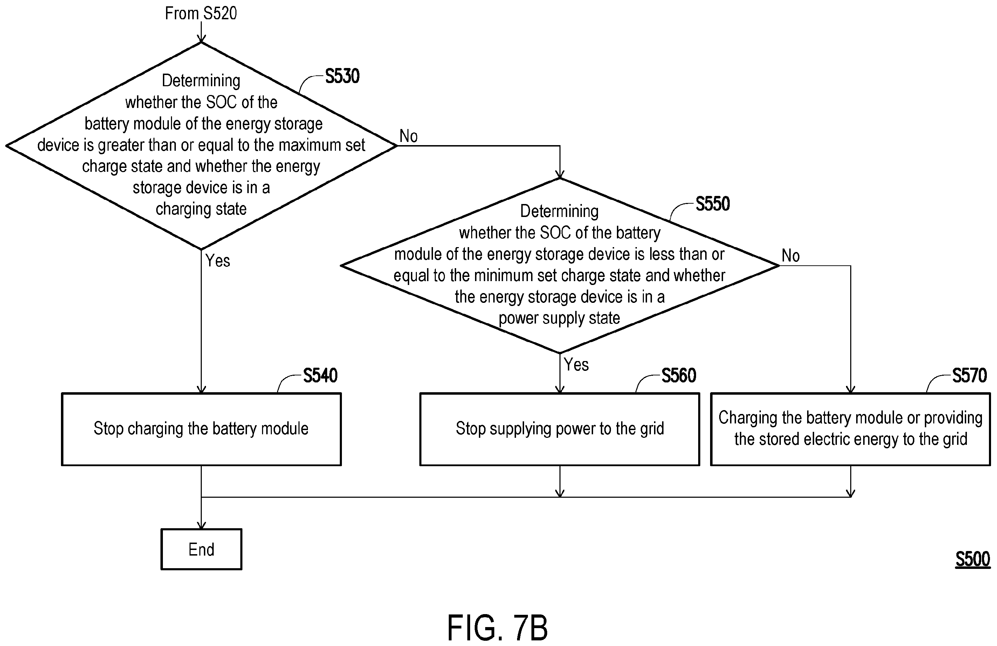

Referring to FIG. 1, FIG. 7A and FIG. 7B, FIG. 7A and FIG. 7B are flowcharts of an electric energy dispatching method according to an embodiment of the disclosure. In this embodiment, the electric energy dispatching method S500 is used to execute electric energy dispatching in different electricity price periods (e.g., peak period, off-peak period, or semi-peak period) of the contract period EDCT.

The electric energy dispatching method S500 includes steps S510 to S570. The electric energy management device 120 determines the number of electricity price periods in the electric energy dispatch contract EDC in step S510, and executes electric energy dispatching according to the number of electricity price periods in the electric energy dispatch contract EDC in step S520. In step S520, the electric energy management device 120 may execute electric energy dispatching according to the number of electricity price periods in the electric energy dispatch contract EDC by using, for example, a SARIMA model. For example, the electric energy dispatch contract EDC has three electricity price periods (e.g., peak period, off-peak period, and semi-peak period). Therefore, the electric energy management device 120 may execute electric energy dispatching according to the comparison result between the grid GD load of the current electricity price period and the grid GD power of the current electricity price period and according to the comparison result between the grid GD load of the next electricity price period and the grid GD power of the next electricity price period.

For example, the electric energy dispatch contract EDC has two electricity price periods (e.g., peak period and off-peak period). Therefore, the electric energy management device 120 may execute electric energy dispatching according to the comparison result between the grid GD load of the current electricity price period and the grid GD power of the current electricity price period.

For example, the electric energy dispatch contract (EDC) has a single electricity price period. Therefore, the electric energy management device 120 may execute electric energy dispatching according to the comparison result between the grid GD load of the current electricity price period and the grid GD power of the current electricity price period.

Next, the electric energy management device 120 determines whether to supply power or charge according to the state of the energy storage device 110_1 in steps S530 to S570. In this embodiment, the operations of steps S530 to S570 are substantially similar to the operations of steps S304 and S313 to S316, and thus are not repeated herein.

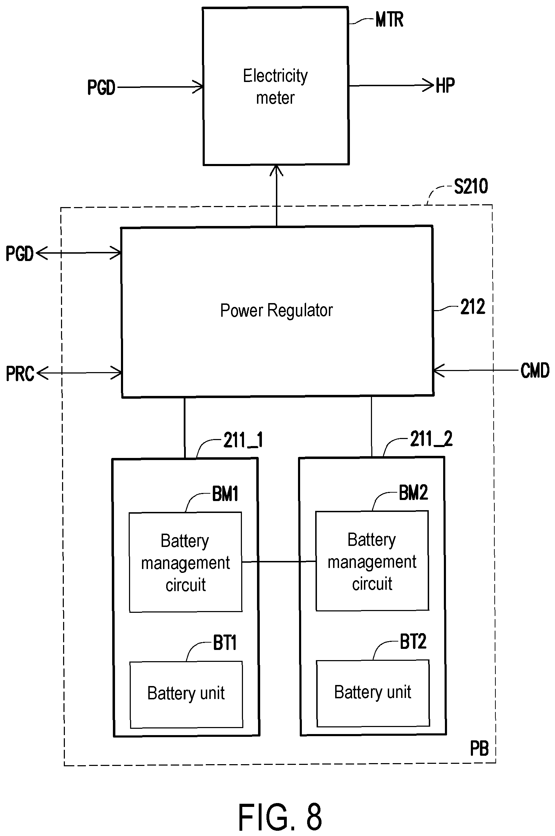

Referring to FIG. 1 and FIG. 8, FIG. 8 is a schematic diagram of an energy storage device and an electricity meter according to an embodiment of the disclosure. In this embodiment, the energy storage device 210 includes battery modules 211_1 and 211_2 and a power regulator 212. The battery module 211_1 includes a battery unit BT1 and a battery management circuit BM1. The battery module 211_2 includes a battery unit BT2 and a battery management circuit BM2. The battery management circuit BM1 is coupled to the battery unit BT1 and the electric energy management device 120. The battery management circuit BM2 is coupled to the battery unit BT2 and the electric energy management device 120. The power regulator 212 is coupled to the battery management circuits 212_1 and 212_2, the electricity meter MTR, and the electric energy management device 120.

In this embodiment, the power regulator 212 receives the dispatching command CMD from the electric energy management device 120 during the contract period EDCT. The power regulator 212 controls the battery management circuits BM1 and BM2 according to the dispatching command CMD. Therefore, the battery management circuits BM1 and BM2 execute area reserve dispatching using the stored electric energy PB stored in the battery units BT1 and BT2 based on the dispatching command CMD.

For example, the battery modules 211_1 and 211_2 and the power regulator 212 may be coupled to each other in series via the battery management circuits BM1 and BM2. Therefore, the battery units BT1 and BT2 are also coupled to each other in series. When receiving the dispatching command CMD, the power regulator 212 communicates with the battery management circuit BM1, and communicates with the battery management circuit BM2 via the battery management circuit BM1. Therefore, the battery management circuits BM1 and BM2 execute area reserve dispatching based on the dispatching command CMD.

In this embodiment, the electricity meter MTR provides information reflecting the historical actual power supply HP corresponding to the stored electric energy PB during the contract period EDCT. The electric energy management device 120 calculates the power supply electricity price according to the historical actual power supply corresponding to the stored electric energy PB in the contract period EDCT. Furthermore, the electricity meter MTR provides the historical actual power consumption of the electric energy PGD corresponding to the grid GD. The electric energy management device 120 sends a warning message according to the historical actual power consumption.

For example, the battery units BT1 and BT2 are respectively implemented by at least one battery. The battery may be an aluminum-ion battery.

To sum up, in this disclosure, the energy storage devices in the area may be controlled to provide multiple stored electric energy to a grid according to the contracted power supply during the contract period. Therefore, the multiple stored electric energy from the area are provided to the grid during the contract period. In this disclosure, sufficient stored electric energy may be provided to the grid during the contract period. In this way, the power supply stability or power supply reliability of the grid may be maintained during the contract period. In addition, the disclosure may realize aggregated islanding operation of an area.

**Claims**

1. An electric energy dispatching method (S100), comprising:

   receiving a contracted power supply (EDCP) and a contract period (EDCT) of an electric energy dispatch contract (EDC) in an area; controlling a plurality of energy storage devices (110_1-110_n) in the area to provide a plurality of stored electric energy (PB1-PBn) to a grid (GD) according to the contracted power supply (EDCP) during the contract period (EDCT); and stabilizing power supply of the grid (GD) using the stored electric energy (PB1-PBn).

2. The electric energy dispatching method (S100, S200) according to claim 1, wherein controlling the energy storage devices (110_1-110_n) in the area to provide the stored electric energy (PB1-PBn) according to the contracted power supply (EDCP) comprises:

   sending a first dispatching command (CMD1) to a first energy storage device (110_1) among the energy storage devices (110_1-110_n) and sending a second dispatching command (CMD2) to a second energy storage device (110_2) among the energy storage devices (110_1-110_n) through an electric energy management device (120); in response to the first dispatching command (CMD1), providing a first stored electric energy (PB1) among the stored electric energy (PB1-PBn) through the first energy storage device (110_1); and in response to the second dispatching command (CMD2), providing a second stored electric energy (PB2) among the stored electric energy (PB1-PBn) through the second energy storage device (110_2).

3. The electric energy dispatching method (S100, S200) according to claim 1, further comprising:

   receiving a plurality of historical actual power supplies of a plurality of electricity meters (MTR) corresponding to the energy storage devices (110_1-110_n) during the contract period (EDCT); calculating a power supply electricity price according to the historical actual power supplies corresponding to the stored electric energy (PB1-PBn) in the contract period (EDCT).

4. The electric energy dispatching method (S100, S300) according to claim 1, wherein controlling the energy storage devices (110_1-110_n) in the area to provide the stored electric energy (PB1-PBn) according to the contracted power supply (EDCP) comprises:

   receiving a grid frequency (FGD) of the grid (GD); and dispatching the stored electric energy (PB1-PBn) according to a changing trend of the grid frequency (FGD).

5. The electric energy dispatching method (S100, S300) according to claim 4, wherein dispatching the stored electric energy (PB1-PBn) according to the changing trend of the grid frequency (FGD) comprises:

   setting a first frequency (F1), a second frequency (F2) and a third frequency (F3), wherein the first frequency (F1) is less than the second frequency (F2), wherein the second frequency (F2) is less than the third frequency (F3); setting a status flag to a first value when the grid frequency (FGD) is less than or equal to the first frequency; setting the status flag to a second value when the grid frequency (FGD) is greater than the second frequency (F2) and less than or equal to the third frequency (F3); and in response to the first value of the status flag, providing the stored electric energy (PB 1-PBn) to the grid (GD) when the grid frequency (FGD) is greater than the first frequency (F1) and less than or equal to the second frequency (F2).

6. The electric energy dispatching method (S100, S300) according to claim 5, wherein dispatching the stored electric energy (PB1-PBn) according to the changing trend of the grid frequency (FGD) further comprises:
in response to the second value of the status flag, stop providing the stored electric energy (PB1-PBn) to the grid (GD) when the grid frequency (FGD) is greater than the first frequency (F1) and less than or equal to the second frequency (F2).

7. The electric energy dispatching method (S100, S400) according to claim 1, wherein controlling the energy storage devices (110_1-110_n) in the area to provide the stored electric energy (PB1-PBn) according to the contracted power supply (EDCP) comprises:

   receiving power from a renewable energy (PRC); and
   dispatching the stored electric energy (PB1-PBn) and the renewable energy (PRC) according to a variation of the power.

8. The electric energy dispatching method (S100, S400) according to claim 7, wherein dispatching the stored electric energy (PB1-PBn) according to the variation of the power comprises:

   setting a first threshold and a second threshold according to an allowable variation of the power, wherein the first threshold is greater than the second threshold; and
   dispatching the stored electric energy (PB1-PBn) and the renewable energy (PRC) according to a comparison result between a current power of the renewable energy (PRC) and the first threshold and the second threshold.

9. The electric energy dispatching method (S100, S400) according to claim 8, wherein the renewable energy (PRC) is from the grid (GD), wherein dispatching the stored electric energy (PB1-PBn) and the renewable energy (PRC) according to the comparison result between the current power of the renewable energy (PRC) and the first threshold and the second threshold comprises:

   subtracting the first threshold from a previous power of the renewable energy (PRC) to generate a power dispatching value, and charging battery modules (211_1, 211_2) of the energy storage devices (110_1-110_n) according to the power dispatching value when the current power is greater than or equal to the first threshold; and
   subtracting the second threshold from the previous power to generate the power dispatching value, and supplying power to the grid (GD)

according to the power dispatching value when the current power is less than or equal to the second threshold.

10. An electric energy dispatching system (100), comprising:

    a plurality of energy storage devices (110_1-11010_n) in an area; and
    an electric energy management device (120), communicatively coupled to the energy storage devices (110_1-110_n), configured to receive a contracted power supply (EDCP) and a contract period (EDCT) of an electric energy dispatch contract (EDC) in the area, control the energy storage devices (110_1-110_n) to provide a plurality of stored electric energy (PB1-PBn) to a grid (GD) according to the contracted power supply (EDCP) during the contract period (EDCT),
    wherein the stored electric energy (PB1-PBn) is configured to stabilize power supply of the grid (GD).

11. The electric energy dispatching system (100) according to claim 10, wherein:

    the electric energy management device (120) sends a first dispatching command (CMD1) to a first energy storage device (110_1) among the energy storage devices (110_1-110_n) and sends a second dispatching command (CMD2) to a second energy storage device (110_2) among the energy storage devices (110_1-110_n);
    in response to the first dispatching command (CMD1), the first energy storage device (110_1) provides a first stored electric energy (PB1) among the stored electric energy (PB1-PBn); and
    in response to the second dispatching command (CMD2), the second energy storage device (110_2) provides a second stored electric energy (PB2) among the stored electric energy (PB1-PBn).

12. The electric energy dispatching system (100) according to claim 10, further comprising:

    a plurality of electricity meters (MTR), wherein the electric energy management device (120) receives a plurality of historical actual power supplies of the electricity meters (MTR) corresponding to the energy storage devices (110_1-110_n) during the contract period (EDCT),
    wherein the electric energy management device (120) calculates a power supply electricity price according to the historical actual power supplies corresponding to the stored electric energy (PB1-PBn) in the contract period (EDCT).

13. The electric energy dispatching system (100) according to claim 10, wherein each of the energy storage devices (110_1-110_n) receives a grid frequency (FGD) of the grid (GD) and dispatches the stored electric energy (PB1-PBn) according to a changing trend of the grid frequency (FGD).

14. The electric energy dispatching system (100) according to claim 13, wherein the electric energy management device (120) is configured to:

   set a first frequency (F1), a second frequency (F2) and a third frequency (F3), wherein the first frequency (F1) is less than the second frequency (F2), wherein the second frequency (F2) is less than the third frequency (F3);
   set a status flag to a first value when the grid frequency (FGD) is less than or equal to the first frequency (F1);
   set the status flag to a second value when the grid frequency (FGD) is greater than the second frequency (F2) and less than or equal to the third frequency (F3); and
   in response to the first value of the status flag, provide the stored electric energy (PB1-PBn) to the grid (GD) when the grid frequency (FGD) is greater than the first frequency (F1) and less than or equal to the second frequency (F2).

15. The electric energy dispatching system (100) according to claim 14, wherein in response to the second value of the status flag, the electric energy management device (120) stops providing the stored electric energy (PB1-PBn) to the grid (GD) when the grid frequency (FGD) is greater than the first frequency (F1) and less than or equal to the second frequency (F2).

16. The electric energy dispatching system (100) according to claim 10, wherein the electric energy management device (120) receives power from a renewable energy (PRC) and dispatches the stored electric energy (PB1-PBn) and the renewable energy (PRC) according to a variation of the power.

17. The electric energy dispatching system (100) according to claim 16, wherein the electric energy management device (120) sets a first threshold and a second threshold according to an allowable variation of the power, wherein the first threshold is greater than the second threshold, and dispatches the stored electric energy (PB1-PBn) and the renewable energy (PRC) according to a comparison result between a current power of the renewable energy

(PRC) and the first threshold and the second threshold.

18. The electric energy dispatching system (100) according to claim 17, wherein:

   the renewable energy (PRC) is from the grid (GD),
   the electric energy management device (120) subtracts the first threshold from a previous power of the renewable energy (PRC) to generate a power dispatching value, and charges battery modules (211_1, 211_2) of the energy storage devices (110_1-110_n) according to the power dispatching value when the current power is greater than or equal to the first threshold, and
   the electric energy management device (120) subtracts the second threshold from the previous power to generate the power dispatching value, and supplies power to the grid (GD) according to the power dispatching value when the current power is less than or equal to the second threshold.

FIG. 1

EP 4 701 021 A1

| Receiving a contracted power and a contract period of an electric energy dispatch contract in an area | ⌐S110 |
|---|---|

| Controlling energy storage devices in the area to provide a plurality of stored electric energy to a grid according to the contracted power during the contract period | ⌐S120 |
|---|---|

| Stabilizing power supply of the grid using the plurality of stored electric energy | ⌐S130 |
|---|---|

S100

FIG. 2

FIG. 3A

FIG. 3B

EP 4 701 021 A1

Start

Receiving information from the electricity meter corresponding to the energy storage device ⎯ S2101

Obtaining reaction time point, duration period, and recovery period ⎯ S2102

Determining whether the first timing value reaches the first time threshold ⎯ S2103

Yes → To S2105

No

Energy storage devices continuously supply power to the grid ⎯ S2104

S210

FIG. 3C

EP 4 701 021 A1

From S2103 →

**S2105**
Determining whether the second timing value reaches the second time threshold

Yes →

No ↓

**S2107**
Determining whether the current time is in the off-peak period

Yes →

No ↓

**S2108** — Stop charging the energy storage device

Charging the energy storage device — **S2106**

↓

**S2109**
Determining whether it has exited the recovery period

No →

Yes ↓

**S210A**
Whether the current time is within the time period for executing ancillary service standby

No →

Yes ↓

To S209

End

**S210**

FIG. 3D

FIG. 4

FIG. 5A

From S303,S307,S308,S311,S312

S304 Determining whether the SOC of the battery module of the energy storage device is greater than or equal to the maximum set charge state and whether the energy storage device is in a charging state

No

Yes

S314 Determining whether the SOC of the battery module of the energy storage device is less than or equal to the minimum set charge state and whether the energy storage device is in a power supply state

No

Yes

S313 Stop charging the battery module

S315 Stop supplying power to the grid

S316 Charging the battery module or providing the stored electric energy to the grid

End

S300

FIG. 5B

EP 4 701 021 A1

```
                              ┌──────────┐
                              │  Start   │
                              └────┬─────┘
                                   │
          ┌────────────────────────────────────────┐
          │ Setting the allowable variation of power of │──S401
          │              the grid                   │
          └────────────────────┬───────────────────┘
                               │
          ┌────────────────────────────────────────┐
          │ Setting the first threshold and the second │──S402
          │ threshold according to the allowable    │
          │        variation of power               │
          └────────────────────┬───────────────────┘
                               │
                          ◇───────S403
                    Current power                No
              of renewable energy ≥ first  ──────────────┐
                    threshold?                            │
                          │                               ▼
                        Yes                          ◇───────S406
                          │                       Current power              No
                          │                 of renewable energy ≤ second ──────────┐
                          │                       threshold?                        │
                          │                          │                              │
                          │                         Yes                             │
                          ▼                          ▼                              ▼
              ┌─────────────────────┐   ┌─────────────────────┐   ┌─────────────────────┐
         S404 │ Charging the battery │   │ Supplying power to   │   │ Stop charging and    │ S408
              │ module according to  │   │ the grid according   │   │ stop supplying       │
              │ the power of the     │   │ to the power of the  │   │ power                │
              │ previous entry of    │   │ previous entry of    │   └──────────┬──────────┘
              │ renewable energy and │   │ renewable energy and │              │
              │ the first threshold  │   │ the second threshold │              │
              └──────────┬──────────┘   └──────────┬──────────┘              │
                         │                          │                         │
                         ▼                          ▼                         ▼
                      To S405                                              S400
```

FIG. 6A

From S404,S407,S408

Determining
whether the SOC of the
battery module of the energy storage
device is greater than or equal to the maximum set
charge state and whether the energy
storage device is in a
charging state — S405

No

Yes

Determining
whether the SOC of the battery
module of the energy storage device is less than or
equal to the minimum set charge state and whether
the energy storage device is in a
power supply state — S410

No

Yes

Stop charging the battery module — S409

Stop supplying power to the grid — S411

Charging the battery module or providing the stored electric energy to the grid — S412

End

S400

FIG. 6B

Start

Determining the number of electricity price periods in the electric energy dispatch contract — S510

Executing electric energy dispatch according to the number of electricity price periods in the electric energy dispatch contract — S520

To S530    S500

# FIG. 7A

From S520

Determining
whether the SOC of the
battery module of the energy storage
device is greater than or equal to the maximum set
charge state and whether the energy
storage device is in a
charging state — S530

No

Yes

Determining
whether the SOC of the battery
module of the energy storage device is less than or
equal to the minimum set charge state and whether
the energy storage device is in a
power supply state — S550

No

Yes

Stop charging the battery module — S540

Stop supplying power to the grid — S560

Charging the battery module or providing the stored electric energy to the grid — S570

End

S500

FIG. 7B

EP 4 701 021 A1

FIG. 8

## EUROPEAN SEARCH REPORT

Europäisches
Patentamt
European
Patent Office
Office européen
des brevets

**Application Number**

EP 25 18 1724

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 135 253 B2 (LOF PER ANDERS KRISTIAN [SE]; GERTMAR LARS GUSTAF INGOLF [SE] ET AL.) 20 November 2018 (2018-11-20)<br>* claims 1, 4, 11, 12 *<br>* figures 6, 20, 24 *<br>* column 2, lines 36-47 *<br>* column 5, lines 16-20 *<br>* column 29, lines 38-40 *<br>----- | 1-18 | INV.<br>H02J3/00<br>G06Q50/06<br>H02J3/14<br>H02J3/32<br>H02J3/38 |
| A | US 2021/003974 A1 (YANG WEIWEI [US] ET AL) 7 January 2021 (2021-01-07)<br>* the whole document *<br>----- | 1-18 | |
| A | CN 115 622 065 A (UNIV XI AN JIAOTONG ET AL.) 17 January 2023 (2023-01-17)<br>* the whole document *<br>----- | 1-18 | |

**TECHNICAL FIELDS SEARCHED (IPC)**

H02J
G06Q

The present search report has been drawn up for all claims

| Place of search | Date of completion of the search | Examiner |
|---|---|---|
| Munich | 12 November 2025 | Preuss, Elisabeth |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 25 18 1724

12-11-2025

| Patent document cited in search report | | Publication date | Patent family member(s) | | Publication date |
|---|---|---|---|---|---|
| US 10135253 | B2 | 20-11-2018 | EP | 1396060 A1 | 10-03-2004 |
| | | | US | 2002103745 A1 | 01-08-2002 |
| | | | WO | 02103879 A1 | 27-12-2002 |
| US 2021003974 | A1 | 07-01-2021 | EP | 3973607 A1 | 30-03-2022 |
| | | | US | 2021003974 A1 | 07-01-2021 |
| | | | WO | 2021002966 A1 | 07-01-2021 |
| CN 115622065 | A | 17-01-2023 | NONE | | |

For more details about this annex : see Official Journal of the European Patent Office, No. 12/82